# EUROPEAN PATENT APPLICATION

(11) **EP 4 516 990 A1**
(43) Date of publication of application: **05.03.2025**
(21) Application number: 23780321.8
(22) Date of filing: 27.03.2023
(51) Int. Cl.: D06P 5/26, C09B 67/02

(54) **IMAGE TRANSFER METHOD AND WHITE URETHANE PARTICLES TO BE USED FOR SAME**

(30) Priority: 28.03.2022 JP 2022065919; 22.09.2022 JP 2022163540
(71) Applicant: Oasis Imaging LLC, Hawthorne, California 90250 (US)
(72) Inventor: FURUKAWA Kenichi, Sakura-shi, Chiba 285-0858 (JP)
(74) Representative: JWP Patent & Trademark Attorneys
(86) International application number: PCT/JP2023/012151
(87) International publication number: WO 2023/190311

(57) **Abstract**

**Problem**

To print a color image excellent in sharpness and washing resistance on a dark color textile product through ink-jetting.

**Solution**

Provided is an image transfer method comprising: a step for printing, through ink-jetting, an image by spraying color ink to an ink image receiving body base; a step for printing an adhesive image by further spraying, in a superposing manner, adhesive transparent ink to the image printed on the ink image receiving body; a step for attaching a white powder of urethane, which has a titanium oxide powder dispersed therein or coated on the surface thereof, to the adhesive image printed on the ink image receiving body; a step for heating the ink image receiving body to which the white powder has been attached and thermocompression-bonding the heated image receiving body onto a print target body; and a step for transferring the image to the print target body by detaching the ink image receiving body base from the print target body.

## Description

### FIELD OF THE INVENTION

The present invention relates to a method for transferring inkjet printed color images to textile products, and to white urethane particles for use in the same. More specifically, the present invention relates to a method for transferring color images of superior sharpness and laundering resistance to textile products having dark colors, such as black.

### BACKGROUND OF THE INVENTION

Conventionally, screen printing is used to print images on various types of textile products. However, screen printing is not suitable for one-off products or small lots due to the cost of preparing the screens and the difficulties involved in color printing. In addition, screen printing cannot be used on complicated sewn textile products. Meanwhile, direct inkjet printing is employed for textile products such as T-shirts. This process is referred to as DTG (Data To Garment) printing.

### SUMMARY OF THE INVENTION

### Problem to be Solved by the Invention

When inkjet printing is directly used onto a textile product, the ink is set into the textile via heating after printing. This method can only be used on flat textile products such as T-shirts. However, a greater problem is that inkjet printing has little ability to mask the color of the underlying textile product, and thus can only be used as-is on substantially white or light-colored textile products. Therefore, inkjet printers are equipped with a plurality of heads for applying white ink, which is applied thickly to mask the color of the underlying textile product before printing with color ink.

However, this approach presents the following problems. Firstly, titanium oxide powder, which has a specific gravity of 4 or greater and is extremely difficult to disperse stably in liquids, is used as a white pigment in white inks. The powder is micronized to sub- micron sizes or finer, and recirculating heads that continuously recirculate ink are also used. More simple measures include thoroughly shaking ink cartridges before use, and constantly vibrating the cartridges during use. Nonetheless, dispersibility deteriorates over time, inevitably resulting in clogged nozzles and the need to replace the printhead whenever nozzles become clogged; thus, printheads are effectively treated as disposables despite being expensive basic components.

Secondly, white ink, even when applied in large quantities, penetrates into the pores in textiles, thus necessitating prior application of a penetration-blocking primer (referred to as a pretreatment) to the areas where the textile product is to be printed. The pretreatment process involves applying a thick coating of aqueous resin via spraying or roll coating, then heating the resin. In addition to being cumbersome, this process can result in defects in the form of residual pretreatment agent on the textile product even after washing.

Meanwhile, a transfer printing method known as DTF (Data To Film) has emerged recently, and is rapidly replacing DTG. This method broadly comprises the following four steps. In the first step, color inkjet printing is performed upon a thin polyester image carrier (The image carrying layer is releasable). In the second step, a solid-white underbase layer is printed, likewise via inkjet printing, in the areas in which color printing is to be performed. In the third step, a transparent urethane powder having a particle size of approximately 100-200 µ is dusted onto the still-wet printed underbase, and any excess powder is removed. In the fourth step, heating is performed to melt the urethane powder layer and create a smooth surface integrated with the image carrier. Subsequently, the image carrier is cut to a predetermined size, the printed image is transferred to the textile product using a heat press, and the film base is peeled off. This process has the advantages of not requiring pretreatment of the textile product and being capable of printing on products made of any kind of textile material, including dark-colored textiles. The process also has the advantage of enabling low-cost mass production, since continuous printing can be performed on a roll of film. However, as in the case of direct inkjet printing, this method still presents fundamental problems regarding the application of white ink.

### Means for Solving the Problem

In order to solve the problems described above, a first aspect of the present invention provides an image transfer method comprising the steps of: printing an image by spraying color ink onto an ink image carrier using an inkjet printer; printing an adhesive image by further spraying an adhesive transparent ink over the image printed on the ink image carrier; depositing, onto the adhesive image printed on the ink image carrier, a white powder of urethane comprising a titanium oxide powder dispersed within the urethane or coating the surface thereof; heating the ink image carrier on which the white powder is deposited, and thermo-compression bonding the heated image carrier to a printing substrate; and transferring the image to the printing substrate by detaching the ink image carrier from the object to be printed.

A second aspect of the present invention provides a white powder of urethane for use in an image transfer method, wherein the white powder of urethane comprising a titanium oxide powder dispersed within the urethane or coating the surface thereof.

A third aspect of the present invention provides an adhesive transparent ink for inkjet printing for use in the image transfer method according to the first aspect.

In accordance with the present invention, it is possible to inexpensively transfer print color images of superior sharpness and laundering resistance onto not only white or light-colored products, but also dark-colored textile products, using a common inkjet printer and without using white inks that present the problem of nozzle clogging.

The present invention is not limited to the field of textiles. As appropriate, various non-urethane hot melt powders (such as polyester, nylon, epoxy, and ethylene-vinyl acetate) can be used to print on a wide variety of materials using a process similar to that of the present invention. However, it will be obvious that this too is only one embodiment of the present invention.

Characteristic features of the present invention other than those disclosed above will be disclosed in the following description of embodiments and in the attached drawing so as to be understood by a person skilled in the art.

### BRIEF DESCRIPTION OF THE DRAWINGS

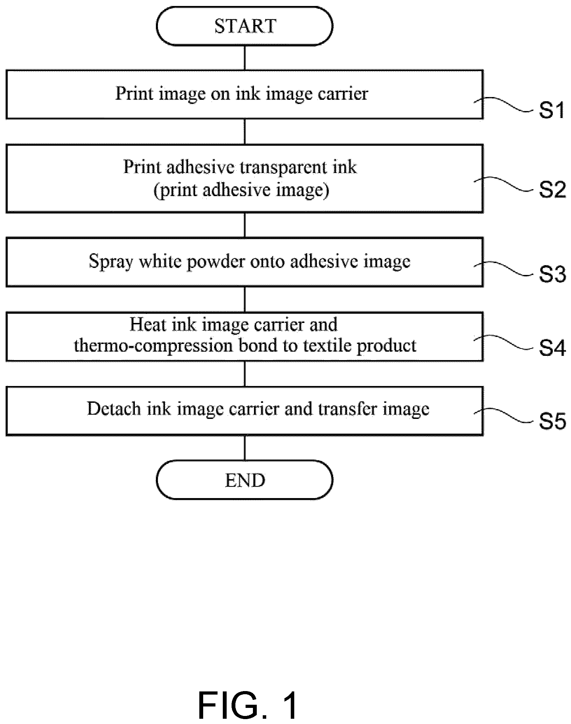

FIG. 1 is a flowchart illustrating one embodiment of the present invention.

### DETAILED DESCRIPTION OF THE INVENTION

The following is a description of one embodiment of the present invention.

As a result of diligent research, the inventor realized that a novel form of DTF printing not requiring the application of white ink is possible using the following method, thereby arriving at the present invention. Said method will be described below with reference to the flowchart in FIG. 1.

Specifically, a color image is inkjet-printed onto an ink image carrier using color ink (step S1 in FIG. 1), after which a solid-fill coating of an adhesive transparent ink is applied via inkjet to make the parts where the color image has been printed adhesive (step S2). White urethane particles (hereinafter, "white powder") comprising a titanium oxide powder dispersed therein or coating the surface thereof are then sprayed and deposited onto the adhesive image parts (step S3). The ink image carrier is then heated to melt the white powder, after which the ink image carrier is thermo-compression bonded to a textile product (step S4), and the ink image carrier is detached (step S5). As a result, the melted white powder layer is fused to the textile product along with the color image. The solid-fill coating of the transparent ink may be printed after printing with color ink has been completed (two-pass printing), or in a continuous printing process in which a software RIP is used to apply the transparent ink a few seconds after the color ink has been applied (single-pass printing).

A polyester film comprising a detachable ink image carrying layer, or waterslide transfer paper (decal paper) constituted by water-permeable backing paper comprising a coating of water-soluble resin, such as dextrin, a few microns thick, may be used as the ink image carrier. The dextrin in waterslide transfer paper dissolves in the water and certain glycols in the ink, thus making possible an ink image carrier that works through dissolution and swelling, rather than through penetration or absorption into pores as in the case of typical ink image carriers. Unlike cases in which a polyester film is used, the process of peeling off the ink image carrier in this case is performed by wetting the waterslide transfer paper after it has been thermo-compression bonded to the textile product. The water permeating the backing paper dissolves the dextrin layer, allowing the backing paper to be peeled off at the interface therebetween.

The adhesive transparent ink serves to adhere the white powder to the color image through adhesive action. The composition of the transparent ink contains approximately 30-60% water, and a few dozen percent water-miscible glycols to adjust viscosity and keep the printhead from drying out. Approximately 10-30% of an aqueous emulsion is also added in order to taking in the pigment constituting the colorant. Specifically, the ink is, for example, a solution containing a mixture of 50% purified water, 30% ethylene glycol, and 20% of an aqueous dispersion of polyester. It is also desirable to include a water-soluble thickener in order to increase adhesive action.

The white powder in the present invention may be prepared using either of the following methods.

The first method is to coat a transparent urethane powder with a resin containing dispersed titanium oxide powder. Specifically, a binder solution comprising a transparent thermoplastic resin having a softening point of equal to or less than approximately 130°C dissolved or dispersed in a low-boiling-point liquid that does not attack urethane, is first prepared. Next, predetermined amounts of the urethane powder and the titanium oxide powder are mixed and charged into a mortar, and the mixture is thoroughly ground using a pestle while the diluted binder solution is added thereto in a dropwise manner. The mixture is then dried and classified to a predetermined size. The blending ratio of urethane powder and titanium oxide powder is approximately 100:10-40, preferably approximately 100:15-30. A proportion of titanium oxide powder above this range will reduce whiteness-improving performance and result in insufficiently strong adhesion to the product. A proportion of titanium oxide powder below this range will make it difficult to mask the color of the underlying substrate. The solids content of the resin serving as the binder depends on the particle size distribution of the urethane powder, but is generally approximately 20-50% of the weight of the titanium oxide powder. If the solids content is below this range, the titanium oxide powder will not mix completely with the coating agent. If the solids content is above this range, the proportion of the urethane powder that clumps together will increase, reducing the efficiency of breaking the powder up into individual particles.

The second method is through kneading, melting, extruding, and pulverizing. Specifically, a mixture of urethane and titanium oxide powder is charged into a molding machine, kneaded, melted, and extruded to form pellets of the compound, and the pellets are pulverized. This method is employed in the production of powder coating materials, but has a disadvantage in that the production lot size is large.

Next, the requirements for the white powder will be stated. When using whitened urethane powder, the powder must be of a suitable size (approximately 100 µ or smaller, and free of microparticles), or it will be difficult to precisely deposit the powder along the outlines of color-printed images with sharp outlines. This is because any large particles of white powder outside the outlines will be transferred as excess white color. Meanwhile, if a transparent urethane powder is used as in conventional DTF printing, there is no need to precisely deposit the powder along the outlines of color-printed images with sharp outlines as long as the powder covers the parts on which the color-printed image has been printed. This is because there is no problem even though the powder goes outside the lines somewhat, as those parts will be transparent after the image has been transferred.

The DTF printing of the present invention differs greatly from conventional DTF printing, so it would seem as though the actual work process would differ greatly as well. However, the work process is exactly the same in both form and substance, except that the ink image carrier is waterslide transfer paper. This results in the advantage of being able to smoothly transition customers who have been using conventional DTF printing to the DTF printing of the present invention simply by changing the white ink to the transparent ink, and changing the transparent urethane powder to the white powder.

In accordance with the configuration described above, it is possible to inexpensively transfer print color images of superior sharpness and laundering resistance onto not only white or light-colored products, but also dark-colored textile products, using a common inkjet printer and without using white inks that present the problem of nozzle clogging. Moreover, the present invention is not limited to the field of textiles. As appropriate, various non-urethane hot melt powders (such as polyester, nylon, epoxy, and ethylene-vinyl acetate) can be used to print on a wide variety of materials using a process similar to that of the present invention. However, it will be obvious that this too is only one embodiment of the present invention.

Next, working examples of the present invention will be described.

### (Example 1)

The following is an example of the production of white powder presented as a working example 1 of the present invention. The materials used are as follows.
(1) Urethane particles Pearlsen U-204A (trademark, manufactured by Tosoh Corporation)
(2) Average particle size 60 µ; fluidization temperature 115°C
(3) Titanium oxide powder TA104 (trademark, manufactured by Fuji Titanium Co., Ltd.; average particle size 0.7 µ)
(4) Rosin ester KR-604 (trademark, manufactured by Arakawa Chemical Industries Co., Ltd.)
(5) Vylonal MD-1985 (trademark, manufactured by Toyobo)
(6) SPA waterslide transfer paper (trademark, manufactured by Marushige Shiko Co., Ltd.)

10 g rosin ester was dissolved in 30 cc isopropanol to create a binder solution. Next, a mixed powder of 100 g Pearlsen and 30 g titanium oxide powder was charged into a mortar, the binder solution was added thereto in a dropwise manner for 3 minutes while grinding the powder with a pestle, and grinding was continued for another 15 minutes thereafter. Next, after the powder was thoroughly dried, it was classified using a Tetron mesh having 150 mesh lines per inch, and further classified under suction using a nylon mesh having 350 mesh lines per inch to obtain a white powder from which all microparticles had been removed. Next, a white powder was obtained via a process similar to that described above, except that the binder solution was replaced with 30 cc Vylonal.

### (Example 2)

A CMYK color cartridge for an Epson L805 inkjet printer (trademark, CMYK +2 color printhead) was filled with water-based pigment inks, and a +2 color cartridge for the same was filled with the transparent ink. Next, using a software RIP (Acrorip 10.5) as the printer driver, a color image and a transparent solid-fill image were printed by continuously applying the color ink and the transparent ink to a polyester image carrier in synchronization. The white powder of working example 1 was sprayed onto the printed image carrier, and the excess powder was removed. The image carrier was heated to melt the white powder, subsequently laid over a black cotton fabric, pressure-bonded at 150°C for 30 seconds, and cooled, after which the film base was peeled off.

### (Example 3)

A CMYK color cartridge for an Epson EW-M752T inkjet printer (trademark, CMYK +1 color printhead) was filled with water-based pigment inks, and a +1 color cartridge for the same was filled with the transparent ink. Next, a color image was printed on waterslide transfer paper using color ink and the manufacturer printer driver. After the printed surface had dried, a solid-fill image was printed over the color image using the transparent ink. The white powder of working example 1 was dusted onto the printed waterslide transfer paper, and the excess powder was removed. The waterslide transfer paper was heated to melt the white powder, subsequently laid over a black cotton fabric, and pressure-bonded at a temperature of 150°C for 30 seconds. After cooling, the back of the waterslide transfer paper was moistened to detach the backing paper of the base.

In accordance with the configuration described above, it is possible to inexpensively transfer print color images regardless of the lightness or darkness of the color of the textile material or fabric, thus providing a potential standard method for printing onto textile products. In addition, a high-quality finish similar to that yielded by screen printing is achieved, thus enabling application to a variety of products such as wood, plastic, metal, and paper containers.

## Claims

1. A white powder of urethane for use in an image transfer method, wherein the white powder comprising a titanium oxide powder dispersed within the powder or coating the surface thereof.

2. An image transfer method comprising the steps of:
printing an image by spraying color ink onto an ink image carrier using an inkjet printer;
printing an adhesive image by further spraying an adhesive transparent ink over the image printed on the ink image carrier;
depositing, onto the adhesive image printed on the ink image carrier, a white powder of urethane comprising a titanium oxide powder dispersed within the urethane or coating the surface thereof;
heating the ink image carrier on which the white powder is deposited, and thermo-compression bonding the heated image carrier to a printing substrate; and
transferring the image to the objected to be printed by detaching the ink image carrier from the printing substrate.

3. An adhesive transparent ink used in the image transfer method of claim 2.
